Europäisches Patentamt

European Patent Office

Office européen des brevets

(19)

(11) Publication number: **0 265 570**
**B1**

# EUROPEAN PATENT SPECIFICATION

(12)

(45) Date of publication of the patent specification:
**14.02.90**

(51) Int. Cl.⁴: **B60L 13/00, B61B 13/08**

(21) Application number: **86420269.2**

(22) Date of filing: **31.10.86**

(54) Automatic transportation system.

(43) Date of publication of application:
**04.05.88 Bulletin 88/18**

(45) Publication of the grant of the patent:
**14.02.90 Bulletin 90/7**

(84) Designated Contracting States:
**DE FR GB**

(56) References cited:
**EP-A- 0 195 644**
**FR-A- 2 068 155**
**US-A- 3 787 716**
**US-A- 3 974 778**

**PATENT ABSTRACTS OF JAPAN, vol. 7,**
**no. 257 (M-256)[1402], 16 novembre 1983; &**
**JP-A-58 139 602 (SHINKO DENKI K.K.) 19-08-1983**

(73) Proprietor: **Shinko Electric Co. Ltd., 12-2,**
**Nihonbashi 3-chome, Chuo-ku Tokyo 103(JP)**

(72) Inventor: **Horinouchi, Arata c/o SHINKO ELECTRIC CO.,**
**Ltd., Ise-Kohjoh 100. Takegahana-cho, Ise-shi**
**Mie-ken(JP)**
Inventor: **Iseki, Tadao c/o SHINKO ELECTRIC CO., Ltd.,**
**Toyohashi-Kohjoh 150 Amzamotoyashiki, Mitsuya-cho**
**Toyohashi-shi Aichi-ken(JP)**

(74) Representative: **Laurent, Michel et al, Cabinet LAURENT**
**et GUERRE B.P. 32, F-69131 Ecully Cedex(FR)**

ACTORUM AG

## Description

This invention relates generally to an automatic transportation system for transporting materials in factories, warehouse or the like by a linear induction motor-operated carriage movable along a track, and more particularly to such a transportation system incorporating means for sensing direction and speed of movement of the carriage.

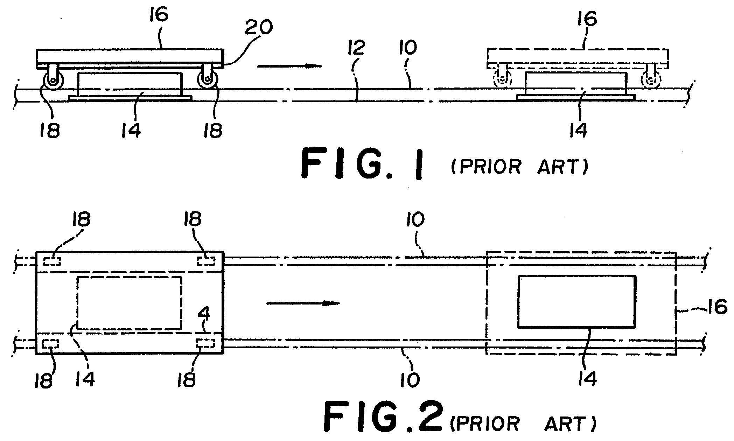

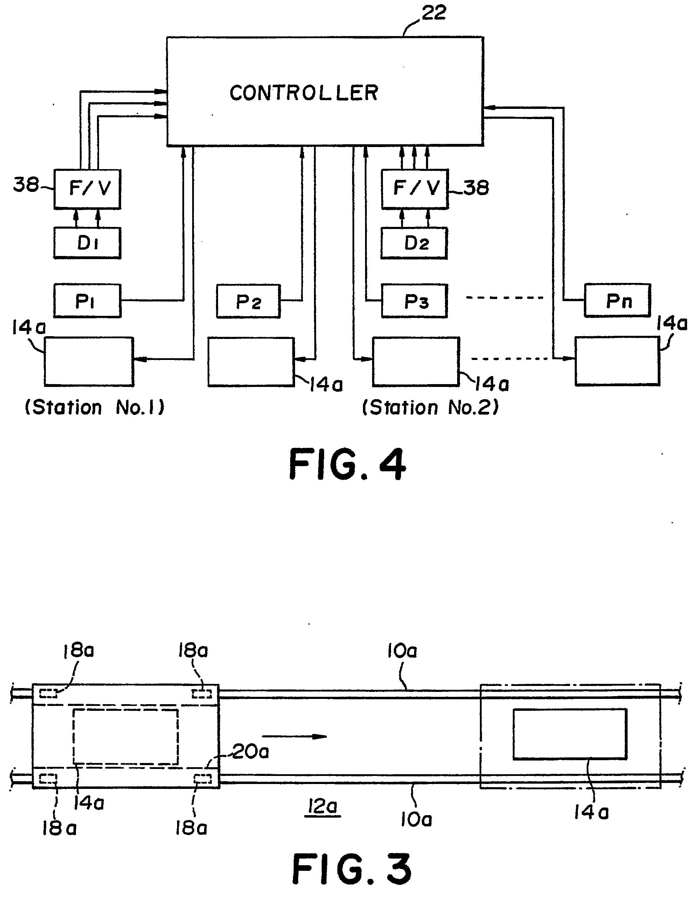

There has been proposed an automatic transportation system for transporting materials for an assembly line in a factory which comprises a carriage propelled by a linear induction motor (hereinafter referred to as "LIM"). One such conventional system as shown in Figs. 1 and 2 includes a pair of spaced rails 10 on a floor 12, and a plurality of stators 14 of LIM arranged on the floor 12 at regions spaced along the rails 10 for producing a traveling magnetic field, and a carriage 16 having wheels 18 disposed in rolling engagement with the rails 10, and a reaction plate 20 mounted on a lower surface of the carriage 16 which reaction plate serves as a secondary conductor of the LIM. The stators 14 are disposed between the pair of rails 10, so that the reaction plate 20 passes over the stators 14 during the travel of the carriage along the rails 10. A position sensor (not shown) is arranged adjacent to each of the stators 14 to detect the arrival of the carriage 16 at the stator 14 to produce a sensing signal. A controller (not shown) is responsive to the sensing signal to energize the stator 14 to apply a traveling magnetic field to the reaction plate 20 to propel the carriage 16 along the rails 10. The materials to be transported are loaded onto the carriage 16. When the carriage 16 passes over each stator 14, the carriage 16 is accelerated by the traveling magnetic field produced by the stator 14 and then is caused to move to the next stator 14 by inertia. Then, when the carriage 16 reaches this next stator 14, it is again accelerated. Thus, this procedure is repeated, so that the carriage 16 can be continuously moved along the rails 10. The carriage 16 is caused to stop at stations for loading and unloading purposes. Each station has the stator 14 which is energized by opposite-phase currents to apply a braking action to the carriage 16 to cause the carriage to stop at the station.

The conventional automatic transportation system further includes a speed sensor arranged at each station for sensing the speed of travel of the LIM-operated carriage 16. One example of such a speed sensor comprises a touch roller adapted to be brought into contact with either a side or an underside of the carriage for being rotated about an axis thereof, and a signal-generating device for producing a signal representative of the rotational speed of the touch roller. The signal-generating device comprises either a tachometer generator for producing voltage signal or a rotary encoder for producing pulses. With this conventional speed sensor, however, the travel speed of the carriage 16 can not be accurately detected due to a slippage between the carriage 16 and the touch roller and wear of the touch roller, since the touch roller is adapted to be brought into frictional engagement with the carriage 16.

Another example of the conventional speed sensor means comprises non-contact type sensors such as photosensors and a counter. More specifically, a pair of first and second non-contact sensors are disposed respectively at two points spaced from each other a predetermined distance along the rails 10. The counter starts a counting operation when the first position sensor senses the carriage 16 and then ceases the counting operation when the second position sensor senses the carriage 16. The speed of travel of the carriage 16 is determined in accordance with the time required for the carriage 16 to run between the pair of first and second sensors, that is, the contents of the counter. The conventional speed sensor means has also been found disadvantageous in that the start and termination of the counting operation are not effected accurately, so that the travel speed of the carriage (16) can not be accurately sensed.

When the carriage (16) is to be stopped at the station, the carriage (16) is decelerated sufficiently and then is brought into a stop position. Usually, when the carriage (16) is to be stopped at the station, the carriage (16) can not be brought exactly into the proper stop position smoothly, in which case the carriage (16) is slightly moved back and forth at a very low speed so as to be brought into the proper stop position. Thus, the speed sensor must sense such a low speed. In addition, the direction of movement of the carriage (16) must also be detected to bring the carriage into proper stop position. The conventional speed sensor means described above have not fully met these requirements.

It is therefore an object of this invention to provide an automatic transporting system incorporating means for accurately sensing the speed and direction of movement of a LIM-operated carriage.

The present invention is based on an automatic transportation system which comprises similarly to the system disclosed in the EP-A-0195 644:

a) a track mounted on a floor ;
b) a carriage movable along the track in opposite directions and having a reaction plate;
c) a plurality of stators mounted on the floor at regions spaced along the track, each of the stators being operable to apply a traveling magnetic field to the reaction plate to impart a propelling force to the carriage to move it along the track;
d) a detector unit comprising a plate mounted on the carriage and having a first row of slots formed therethrough and extending in a direction of movement of the carriage, and at least one detector means disposed adjacent to one of the stators, the detector means comprising first sensor disposed in such a manner that the first row of slots is brought into registry with the first sensor, during the movement of the carriage along the track. the slots being spaced an equal distance from one another, the first sensor sensing the first rows of slots, to produce a first sensing signal représentative of the speed of movement of the carriage when the first row of slots is brought into registry with the first sensor, the detector unit further comprising a converter means responsive to the first sensing signal to produce an output signal representative of the speed of movement of the carriage.

According to the present invention the automatic system is characterized in that:

– said detector unit plate has a second row of slots, parallel with and spaced from said first row of slots and being out of phase from said first row of slots by a predetermined angle, said slots of said second row being spaced said equal distance from one another;
– said detector means comprises a second sensor spaced from said first sensor and disposed in such a manner that said second row of slots is brought into registry with said second sensor during the movement of said carriage along said track, said first and second sensors being dis- posed in a plane perpendicular to the direction of movement of said carriage;
– said second sensor senses said second row of slots to produce a second sensing signal representative of the speed of movement of said carriage when said second row of slots is brought into registry with said second sensor; and
– said converter means is further responsive to said second sensing signal to produce said output signal representative of the speed of movement of said carriage, said output signal being positive when said carriage is moved along said track in one direction, wile said output signal is negative when said carriage is moved in the other direction, whereby the polarity of said output signal represents the direction of movement of said carriage.

One way of carrying out the invention is described in detail below with reference to the accompanying drawings, in which:

Fig. 1 is a schematic side-elevantional view of a portion of an automatic transportation system provided in accordance with the prior art;
Fig. 2 is a schematic plan view of a portion of the automatic transportation system;
Fig. 3 is a view similar to Fig. 1 but showing an automatic transportation system provided in accordance with the present invention;
Fig. 4 is a block diagram of the automatic transportation system of Fig. 3;
Fig. 5 is a front elevational view of a sensing device for sensing direction and speed of movement of a LIM-operated carriage used in the system of Fig. 3; and Fig. 6 is a side elevational view of a portion of the sensing device.

An automatic transportation system shown in Figs. 3 and 4 comprises a track in the form of a pair of spaced rails 10a on a floor 12a, and a plurality of stators 14a arranged on the floor 12a at regions spaced along the rails 10a, and a carriage 16a having wheels 18a disposed in rolling engagement with the rails 10a, and a reaction plate 20a mounted on an underside of the carriage 16a. The stators 14a, when energized, produce a traveling magnetic field. Each of the stators 14a and the reaction plate 20a constitute a linear induction motor (LIM), the reaction plate 20a serving as a secondary conductor of the LIM. The stators 14a are disposed between the pair of rails 10a, so that the reaction plate 20a passes over the stators 14a during the travel of the carriage 16a along the rails 10a. When the reaction plate 20a passes over each stator 14a, the stator 14a is energized to apply a traveling magnetic field to the reaction plate 20a. A plurality of stations where the carriage 16a is to stop are provided on the floor 12a adjacent to some of the stators 14a, respectively.

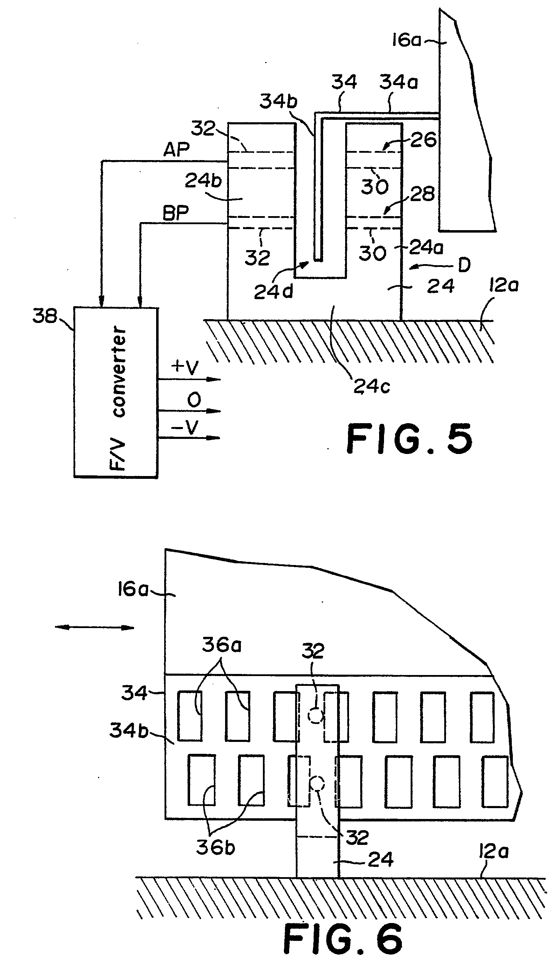

A plurality of position sensors P1 ... Pn are arranged adjacent to the stators 14a, respectively. Each of the position sensors P1 ... Pn serves to detect the arrival of the carriage 16a at the stator 14a disposed adjacent to it to produce a sensing signal. A controller 22 is responsive to the sensing signal to energize the stator 14a disposed adjacent to each of the position sensors P1 ... Pn to produce a travelling magnetic field to propel the carriage 16a along the rails 10a. The controller 22 includes a microprocessor unit of the conventional type, an I/O interface circuit for receiving outputs from the position sensors P1 ... Pn, and a energization circuit for energizing the stators 14a. Those stators 14a disposed adjacent to the respective stations are supplied with opposite-phase currents to produce a traveling magnetic field in a reverse direction to apply a braking action to the carriage 16a while the other stators 14a produce a traveling magnetic field in a normal direction to accelerate the carriage 16a. The automatic transportation system comprises a detector unit comprising a plurality of detector means D1 ... Dn arranged at the respective stations for detecting direction and speed of movement of the carriage 16a. As best shown in Figs. 5 and 6, each of the detector means D1 ... Dn comprises a U-shaped body 24 defined by a pair of opposed first and second arms 24a and 24b and a base 24c interconnecting the arms 24a and 24b at their lower ends, the base 24c being mounted on the floor 12a. The detector means D further includes a pair of upper and lower sensors 26 and 28 each comprising a light-emitting element 30 mounted on the first arm 24a, and a photosensitive element 32 mounted on the second arm 24b remote from the rails 10a. The upper and lower sensors 26 and 28 are disposed in a plane perpendicular to the direction of movement of the carriage 16a. The light-emitting element 30 and photosensitive element 32 of each of the upper and lower sensors 26 and 28 are disposed in alignment with each other. The photosensitive element 32 is responsive to light emitted from the light-emitting element 30 to produce a sensing signal. For example, each light-emitting element 30 comprises a light-emitting diode, and each photosensitive element 32 comprises a phototransistor.

The detector unit further includes an elongated plate 34 of an inverted L-shape defined by a horizontal leg 34a and a vertical leg 34b and mounted on a side face of the carriage 16a at its horizontal leg 34a. A row of slots 36a are formed through the vertical leg 34b of the plate 34 and disposed horizontally, and another row of slots 36b are also formed through the vertical leg 34b in parallel relation to the row of slots 36a and disposed below them. Each row of slots 36a, 36b are spaced from one another at a predetermined pitch. The upper row of slots 36a are 90° out of phase from the lower row of slots 36b. When the carriage 16a arrives at each station, the carriage 16a is decelerated since the stator 14a disposed at the station is supplied with opposite-phase currents under the control of the controller 22. Also, when the carriage 16a arrives at the station, the vertical leg 34b is introduced into a space 24d of the body 24 defined by the opposed arms 24a and 24b and the base 24c in spaced relation thereto.

With this arrangement, when the vertical leg 34b is introduced into the space 24d of the detector body 24 and is moved relatively to the body 24, the upper row of slots 36a are sequentially brought into registry with the upper sensor 26 while the lower row of slots 36b are sequentially brought into registry with the lower sensor 28. Therefore, the upper sensor 26 sequentially senses the upper row of slots 36a so that the photosensitive element 32 of the sensor 26 produces an A-phase pulse signal AP. And, the lower sensor 28 also sequentially senses the lower row of slots 36 so that the photosensitive element 32 of the sensor 28 produces a B-phase pulse signal BP. These sensing signals AP and BP represent the speed of the carriage 16a. When the carriage 16a advances in a normal or forward direction, the A-phase pulse AP is advanced in phase from the B-phase pulse signal BP by 90°. On the other hand, when the carriage 16a advances in a reverse direction, the B-phase pulse signal BP is advanced in phase from the A-phase pulse signal AP by 90°.

Each of the detector means D1 ... Dn further comprises a frequency-voltage (F/V) converter 38 to which the A-phase pulse signal AP and B-phase pulse signal BP are applied. When the carriage 16a moves in the normal direction, the F/V converter 38 is responsive to these two pulse signals AP and BP from the two sensors 26 and 28 to output a positive signal +V of which voltage corresponds to the frequency of each the pulse signals AP and BP. On the other hand, when the carriage 16a moves in the reverse direction, the F/V converter 38 is responsive to the two pulse signals AP and BP to produce a negative signal -V. Thus, the absolute value of the output of the F/V converter 38 represents the speed of movement of the carriage 16a while the polarity of the output of the F/V converter 38 represents the direction of the movement of the carriage 38. The F/V converter 38 of such a construction is within the skill of one of ordinary skill in the art.

The controller 22 receives the output signals of the F/V converter 38 through the I/O interface circuit thereof and controls the direction and magnitude of the traveling magnetic field of the stator 14a through the energization circuit to stop the carriage 16a at a predetermined position.

The detector means D1 ... Dn are of the non-contact type since the vertical leg 34b of the L-shaped plate 34 is held in spaced relation to the opposed arms 24a and 24b and the base 24c of the detector body 24 when the leg 34b is introduced into the space 24d. Therefore, the detector means are not subjected to wear and can perform the function properly and accurately for a long period of time. In addition, with this detector unit, a very low speed of the carriage 16a as wall as the direction of movement of the carriage 16a can be accurately detected.

While the automatic transportation system according to the present invention has been specifically shown and described herein, the invention is to be restricted by the claims and no by the exact showing of the drawings and the description thereof. For example, another non-contact type detector means such as magnetic sensors may replace the detector means D1 ... Dn.

**Claims**

1. An automatic transportation system comprising:
a) a track (10a) mounted on a floor (12a);
b) a carriage (16a) movable along said track (10a) in opposite directions and having a reaction plate (20a);
c) a plurality of stators (14a) mounted on the floor (12a) at regions spaced along said track (10a), each of said stators (14a) being operable to apply a traveling magnetic field to said reaction plate (20a) to impart a propelling force to said carriage (16a) to move it along said track (10a);
d) a detector unit comprising a plate (34) mounted on said carriage (16a) and having a first row of slots (36a) formed therethrough and extending in a direction of movement of said carriage (16a), and at least one detector means (D) disposed adjacent to one of said stators (14a), said detector means comprising a first sensor (26) disposed in such a manner that said first row of slots (36a) is brought into registry with said first sensor (26) during the movement of said carriage (16a) along said track (10a), said slots being spaced an equal distance from one another, said first sensor (26) sensing said first row of slots (36a) to produce a first sensing signal (AP) representative of the speed of movement of said carriage (16a) when said first row of slots (36a) is brought into registry with said first sensor (26), said detector unit further comprising a converter means (38) responsive to said first sensing signals (AP) to produce an output signal representative of the speed of movement of said carriage (16a),
characterized in that:
– said detector unit plate (34) has a second row of slots (36b), slots (36b), parallel with and spaced from said first row of slots (36a) and being out of phase from said first row of slots (36a) by a predetermined angle, said slots (36b) of said second row being spaced said equal distance from one another;
– said detector means comprises a second sensor (28) spaced from said first sensor (26) and disposed in such a manner that said second row of slots (36b) is brought into registry with said second sensor (28) during the movement of said carriage (16a) along said track (10a), said first (26) and second (28) sensors being disposed in a plane perpendicular to the direction of movement of said carriage (16a);

- said second sensor (28) senses said second row of slots (36b) to produce a second sensing signal (BP) representative of the speed of movement of said carriage (16a) when said second row of slots (36b) is brought into registry with said second sensor; and

- said converter means (38) is further responsive to said second sensing signal (BP) to produce said output signal representative of the speed of movement of said carriage (16a), said output signal being positive when said carriage (16a) is moved along said track (10a) in one direction, while said output signal is negative when said carriage (16a) is moved in the other direction, whereby the polarity of said output signal represents the direction of movement of said carriage (16a).

2. An automatic transportation system according to claim 1, further comprising a plurality of position sensors (Pn) each disposed adjacent to a respective one of said stators (14a) for sensing the arrival of said carriage (16a) at said stator (14a) to produce a position sensing signal, and a controller (22) responsive to said position sensing signal to operate said stator (14a) to produce the traveling magnetic field.

3. An automatic transportation system according to claim 2, wherein said controller (22) is responsive to the position sensing signal from the position sensor (Pn), corresponding to one of the stators (14a) adjacent to which said detector means (D) is disposed, to control in accordance with the output signal (AP, BP) from said detector means (D) direction and magnitude of the traveling magnetic field generated by said one of the stators (14).

4. An automatic transportation system according to claim 1, in which each of said first and second sensors (26, 28) comprises a light-emitting element (30) for emitting light and a photosensitive element (32) spaced from said light-emitting element (30) in alignment therewith and being responsive to element (30) in alignment therewith and being responsive to the light from said light-emitting element (30) to produce a respective one of said first and second sensing signals (AP, BP), said plate (34) having a slotted portion (34b) having said first and second rows of slots (36a, 36b) formed therethrough, said slotted portion (34b) being introduced into a space (24d) between said light-emitting element (30) and said photosensitive element (32) in spaced relation thereto.

5. An automatic transportation system according to claim 4, in which said carriage (16a) has a side face, said plate (34) being secured to said side face of said carriage (16a), said slotted portion (34b) of said plate (34) being disposed vertically, so that said first and second rows of slots (36a, 36b) are spaced vertically from each other, said detector means (D) comprises a U-shaped body (24) defined by a pair of opposed vertical arms (24a, 24b) and a base (24c) interconnecting said opposed arms (24a, 24b) at their lower ends and mounted on said floor (12a), said aligned light-emitting element (30)

and photosensitive element (32) of each of said first and second sensors (26, 28) being mounted on said opposed arms (24a, 24b), respectively, said first and second sensors (26, 28) being spaced vertically from each other, and said slotted portion (34b) being introduced into a space (24d) defined by said opposed arms (24a, 24b) and base (24c) of said U-shaped body (14).

## Patentansprüche

1. Automatisches Transportsystem, umfassend

a) eine auf einem Fußboden (12a) montierte Spur (10a),

b) ein in entgegengesetzten Richtungen entlang jener Spur (10a) beweglicher Wagen (16a) mit einer Reaktionsplatte (20a);

c) eine Vielzahl von auf dem Fußboden (12a) zum entlang jener Spur (10a) beabstandeten Bereichen montierten Statoren (14a), wobei jeder Stator (14a) ein wanderndes Magnetfeld an jene Reaktionsplatte (20a) anlegen kann, um jenen Wagen (16a) mit einer Antriebskraft zu beaufschlagen und ihn so entlang jener Spur (10a) zu bewegen;

d) eine Detektoreinheit mit einer Platte (34), die auf jenem Wagen (16a) montiert ist und eine erste Reihe von Schlitzen (36a) aufweist, die durch sie hindurchgehen und sich in einer Bewegungsrichtung jenes Wagens (16a) erstrecken, sowie mit mindestens einem neben einem jener Statoren (14a) angeordneten Detektor (D), wobei jener Detektor einen ersten Sensor (26) umfaßt, der so angeordnet ist, daß jene erste Reihe von Schlitzen (36a) während der Bewegung jenes Wagens (16a) entlang jener Spur (10a) von jenem ersten Sensor (26) registriert werden, wobei jene Schlitze um den gleichen Betrag voneinander beabstandet sind und jener erste Sensor (26) jene erste Reihe von Schlitzen (36a) erfaßt, um ein erstes der Bewegungsgeschwindigkeit jenes Wagens (16a) entsprechendes Erfassungssignal (AP) zu produzieren, wenn jener erste Sensor (26) jene erste Reihe von Schlitzen (36a) registriert, wobei jene Detektoreinheit weiterhin einen Umrichter (38) umfaßt, der auf jene ersten Erfassungssignale (AP) reagiert und ein der Bewegungsgeschwindigkeit jenes Wagens (16a) entsprechendes Ausgangssignal produziert, dadurch gekennzeichnet, daß

- jene Detektorplatte (34) eine zu jener ersten Reihe von Schlitzen (36a) parallelen und von dieser beabstandeten zweite Reihe von Schlitzen (36b) aufweist, die gegenüber jener ersten Reihe von Schlitzen (36a) um einen vorbestimmten Winkel phasenverschoben ist, wobei jene Schlitze (36b) jener zweiten Reihe um jenen gleichen Betrag von einander beabstandet sind;

- jener Detektor einen zweiten Sensor (28) umfaßt, der von jenem ersten Sensor (26) beabstandet und so angeordnet ist, daß jener zweite Sensor (28) jene zweite Reihe von Schlitzen (36b) während der Bewegung jenes Wagens (16a) entlang jener Spur (10a) registriert, wobei jener erste (26) und jener zweite (28) Sensor in einer zur Bewegsungsrichtung jenes Wagens (16a) senkrechten Ebene angeordnet sind;
– jener zweite Sensor (28) jene zweite Reihe von Schlitzen (36b) erfaßt und ein zweites, die Bewegungsgeschwindigkeit jenes Wagens (16a) darstellendes Erfassungssignal (BP) produziert, wenn jener zweite Sensor jene zweite Reihe von Schlitzen (36b) registriert; und
– jener Umrichter (38) weiterhin auf jenes zweite Erfassungssignal (BP) reagiert und jenes die Bewegungsgeschwindigkeit jenes Wagens (16a) darstellende Ausgangssignal produziert, wobei jenes Ausgangssignal positiv ist, wenn jener Wagen (16a) in einer Richtung entlang jener Spur (10a) bewegt wird, und negativ, wenn jener Wagen (16a) in die andere Richtung bewegt wird, wobei die Polarität jenes Ausgangssignals die Bewegungsrichtung jenes Wagens (16a) darstellt.

2. Automatisches Transportsystem nach Anspruch 1, weiterhin umfassend eine Vielzahl von Lagesensoren (Pn), von denen jeder neben einem jeweiligen jener Statoren (14a) zur Erfassung der Ankunft jenes Wagens (16a) an jenem Stator (14a) angeordnet ist, um ein Lageerfassungssignal zu produzieren, sowie ein Steuergerät (22), das auf jenes Lageerfassungssignal reagiert und zur Erzeugung des wandernden Magnetfeldes jenen Stator (14a) in Betrieb setzt.

3. Automatisches Transportsystem nach Anspruch 2, bei dem jenes Steuergerät (22) auf das Lageerfassungssignal von dem Lagesensor (Pn) reagiert, der einem der Statoren (14a) entspricht, neben denen jener Detektor (D) angeordnet ist, um gemäß dem Ausgangssignal (AP, BP) von jenem Detektor (D) Richtung und Größe des durch einen der Statoren (14) erzeugten wandernden Magnetfeldes zu steuern.

4. Automatisches Transportsystem nach Anspruch 1, bei dem jeder jener ersten und zweiten Sensoren (26, 28) ein lichtemittierandes Element (30) zur Emission von Licht und ein lichtempfindliches Element (32) umfaßt, das mit diesem lichtemittierenden Element (30) fluchtend von diesem beabstandet ist, auf das mit ihm fluchtenden Element (30) reagiert und auf das von jenem lichtemittierenden Element (30) emittierte Licht reagiert, um ein jeweiliges jener ersten und zweiten Erfassungssignale (AP, BP) zu produzieren, wobei jene Platte (34) einen geschlitzten Teil (34b) aufweist, durch den jene erste und zweite Reihe von Schlitzen (36a, 36b) hindurchgehen und der in einen Raum (24d) zwischen jenem lichtemittierenden Element (30) und jenem lichtempfindlichen Element (32) von diesen beabstandet eingeführt wird.

5. Automatisches Transportsystem nach Anspruch 4, bei dem jener Wagen (16a) eine Seitenfläche aufweist, wobei jene Platte (34) an der Seitenfläche des Wagens (16a) befestigt ist und der geschlitzte Teil (34b) jener Platte (34) vertikal so angeordnet ist, daß jene erste und zweite Reihe von Schlitzen (36a, 36b) vertikal von einander beabstandet sind, wobei jener Detektor (D) einen durch ein Paar gegenüberliegender vertikaler Arme (24a, 24b) und einen jene gegenüberliegenden Arme (24a, 24b) an deren unteren Enden verbindenden und auf jenem Fußboden (12a) montierten Boden (24c) festgelegten U-förmigen Körper umfaßt, wobei jenes fluchtende lichtemittierende Element (30) und lichtempfindliche Element (32) jeweils des ersten und zweiten Sensors (26, 28) jeweils an jenen gegenüberliegenden Armen (24a, 24b) montiert sind, wobei der erste und zweite Sensor (26, 28) vertikal voneinander beabstandet sind und der geschlitzte Teil (34b) in einen durch jene gegenüberliegenden Arme (24a, 24b) und Boden (24c) jenes U-förmigen Körpers (24) festgelegten Raum (24d) eingeführt wird.

## Revendications

1. Système automatique de transport, comprenant:
a) une voie (10a) montée sur un plancher (12a);
b) un chariot (16a) mobile dans des directions opposées le long de ladite voie (10a) et ayant une plaque de réaction (20a);
c) une pluralité de blocs fixes (14a) montés sur le plancher (12a) en des endroits espacés le long de ladite voie (10a), chacun desdits blocs fixes (14a) étant capable d'appliquer un champ magnétique progressif à ladite plaque de réaction (20a) pour imprimer une force de propulsion audit chariot (16a) afin de déplacer celui-ci le long de ladite voie (10a);
d) une unité de détection comprenant une plaque (34) montée sur ledit chariot (16a) et ayant une première rangée de fentes (36a) la traversant et s'étendant dans une direction de déplacement dudit chariot (16a), et au moins un moyen de détection (D) disposé à proximité d'un desdits blocs fixes (14a), ledit moyen de détection comprenant un premier détecteur (26) disposé de telle manière que ladite première rangée de fentes (36a) soit amenée en coïncidence avec ledit premier détecteur (26) pendant le déplacement dudit chariot (16a) le long de ladite voie (10a), lesdites fentes étant situées à égale distance l'une de l'autre, ledit premier détecteur (26) détectant ladite première rangée de fentes (36a) pour produire un premier signal de détection (AP) représentatif de la vitesse de déplacement dudit chariot (16a) lorsque ladite première rangée de fentes (36a) est amenée en coïncidence avec ledit premier détecteur (26), ladite unité de détection comprenant en outre des moyens de conversion (38) réagissant audit premier signal de détection (AP) pour produire un signal de sortie représentatif de la vitesse de déplacement dudit chariot (16a),
caractérisé en ce que:
– ladite plaque (34) de l'unité de détection présente une seconde rangée de fentes (36b), parallèle à et espacée de ladite première rangée de fentes (36a) et étant déphasée d'un angle prédéterminé par rapport à ladite première rangée de fentes (36a), lesdites fentes (36b) de ladite seconde série étant espacées l'une de l'autre de ladite égale distance;
– ledit moyen de détection comprend un second détecteur (28) espacé dudit premier détecteur (26) et disposé de telle manière que ladite seconde rangée de fentes (36b) soit amenée en coïncidence avec ledit second détecteur (28) pendant le déplacement dudit chariot (16a) le long de ladite voie (10a), lesdits premier (26) et second (28) détecteurs étant disposés dans un plan perpendiculaire à la direction de déplacement dudit chariot (16a);

– ledit second détecteur (28) détecte ladite seconde rangée de fentes (36b) pour produire un signal de détection (BP) représentatif de la vitesse de déplacement dudit chariot (16a) lorsque ladite seconde rangée de fentes (36b) est amenée en coïncidence avec ledit second détecteur (28); et

– lesdits moyens de conversion (38) réagissent en outre audit second signal de détection (BP) pour produire ledit signal de sortie représentatif de la vitesse de déplacement dudit chariot (16a), ledit signal de sortie étant positif lorsque ledit chariot (16a) ce déplace le long de ladite voie (10a) dans une première direction, tandis que ledit signal de sortie est négatif lorsque ledit chariot (16a) se déplace dans l'autre direction, la polarité dudit signal de sortie représentant de ce fait la direction de déplacement dudit chariot (16a).

2. Système automatique de transport suivant la revendication 1, comprenant en outre une pluralité de détecteurs de position (Pn) dont chacun est respectivement disposé à proximité d'un desdits blocs fixes (14a) pour détecter l'arrivée dudit chariot (16a) audit bloc fixe (14a) afin de produire un signal de détection de position, et un contrôleur (22) réagissant audit signal de détection de position pour commander audit bloc fixe (14a) de produire le champ magnétique progressif.

3. Système automatique de transport suivant la revendication 2, dans lequel ledit contrôleur (22) réagit au signal de détection de position provenant du détecteur de position (Pn), correspondant à un des blocs fixes (14a) à proximité duquel ledit moyen de détection (D) est disposé, pour régler, en conformité avec le signal de sortie (AP, BP) provenant dudit moyen de détection (D), la direction et la grandeur du champ magnétique progressif produit par ledit bloc fixe (14a) précité.

4. Système automatique de transport suivant la revendication 1, dans lequel chacun desdits premier et second détecteurs (26, 28) comprend un élément émetteur de lumière (30) pour l'émission de lumière et un élément photosensible (32) espacé dudit élément émetteur de lumière (30), disposé en alignement avec celui-ci et réagissant à la lumière provenant dudit élément émetteur de lumière (30) pour produire respectivement un desdits premier et second signaux de détection (AP, BP), ladite plaque (34) comportant une portion fendue (34b) présentant lesdites première et seconde rangées de fentes (36a, 36b) qui la traversent, ladite portion fendue (34b) étant introduite dans un espace (24d) situé entre ledit élément émetteur de lumière (30) et ledit élément photosensible (32) en position espacée par rapport à ceux-ci.

5. Système automatique de transport suivant la revendication 4, dans lequel ledit chariot (16a) comporte une face latérale, ladite plaque (34) étant fixée à ladite face latérale dudit chariot (16a), ladite portion fendue (34b) de ladite plaque (34) étant disposée verticalement de sorte que lesdites première et seconde rangées de fentes (36a, 36b) soient espacées verticalement l'une de l'autre, ledit moyen de détection (D) comprend un corps en U (24), défini par une paire de bras verticaux opposés (24a, 24b) et par une base (24c) reliant lesdits bras opposés (24a, 24b) par leurs extrémités inférieures et monté sur ledit plancher (12a), ledit élément émetteur de lumière (30) et ledit élément photosensible (32), disposés en alignement, de chacun desdits premier et second détecteurs (26, 28) étant montés sur lesdits bras opposés (24a, 24b) respectivement, lesdits premier et second détecteurs (26, 28) étant espacés verticalement l'un de l'autre, et ladite portion fendue (34b) étant introduite dans un espace (24d) délimité par lesdits bras opposés (24a, 24b) et par la base (24c) dudit corps en U (24).

**FIG. 1** (PRIOR ART)

**FIG. 2** (PRIOR ART)

EP 0 265 570 B1

FIG. 4

FIG. 3

**FIG. 5**

**FIG. 6**